# EUROPEAN PATENT APPLICATION

(11) **EP 2 381 428 A1**
(43) Date of publication of application: **26.10.2011**
(21) Application number: 10425132.7
(22) Date of filing: 22.04.2010
(51) Int. Cl.: G07F 9/02, G07F 11/00, G07F 13/00, G07F 17/16

(54) **Automatic vending machine for delivering products and/or beverages and its operating method**

(71) Applicant: Rhea Vendors S.p.A., 21042 Caronno Pertusella (IT)
(72) Inventor: Doglioni Majer, Carlo, 21042 Caronno Pertusella (VA) (IT)
(74) Representative: Valentini, Giuliano

(57) **Abstract**

An automatic vending machine and a method for distributing products and/or providing beverages are described, according to which the function of selection of products and/or beverages is performed through a touch screen. The units of control and graphic interface contained in the machine are both programmed to enable simultaneously, on the same screen, the selection of products and/or beverages on a first portion of the screen, and the display of multimedia contents on a second portion of the screen.

## Description

### Field of the Invention

The present invention relates to an automatic vending machine for the distribution of products and/or the dispensing of beverages, in which the functions of selecting the chosen products and/or beverages are performed through a touch screen.

### Prior Art

The known machines of this type, commonly called "vending machines", have been recently equipped with a monitor programmed to display written messages, icons, buttons or the like that provide selection via a touch screen. In other words, the selection of products and/or beverages to be dispensed may be made by a user by simply touching lightly or pressing the touch screen in correspondence to a button or icon displayed on the screen itself; the control unit that manages the screen is programmed to identify the contact point on the touched screen and retracing back to the product selection and/or the chosen beverage.

The presence of a monitor capable of displaying still or moving images also allows using the same monitor for other purposes, e.g. for displaying advertisements, notices, machine instructions or various kinds of messages.

This implies, however, the need to manage the selection and display functions without them interfering with each other.

The Japanese patent application No. JP-2008040749 describes a vending machine equipped with a touch screen that allows, in mutual exclusion, the displaying of advertisements or a selection keyboard. During the display of advertisements, superimposed touch-sensitive areas are displayed which allow switching from the message display mode to the selection button or icon display mode.

### Summary of the Invention

One object of the present invention is therefore to propose an automatic vending machine for distributing products and/or dispensing of beverages equipped with a touch screen able to simultaneously provide on the same screen, a display function for multimedia contents and a selection function for chosen products and/or beverages.

Another object of the present invention is to propose an automatic vending machine of the above mentioned type and a method for its operation which also allows interaction with the multimedia contents displayed on the screen without interfering with the selection of chosen products and/or beverages.

These objects are achieved according to the invention by way of an automatic vending machine according to claim 1 and a method for its operation according to claim 7. Additional peculiar features are shown in the respective dependent claims.

In particular, the automatic vending machine according to the present invention includes a touch screen monitor for selecting chosen products and/or beverages. At least one control unit and at least one graphic interface unit are provided that are programmed to simultaneously allow, on the same screen, the selection of products and/or beverages upon a first portion of the screen, and display of multimedia contents on a second portion of the screen.

The automatic vending machine according to the present invention therefore lends itself to a much more versatile use than known type machines. In fact, along with the selection keys for products and/or beverages, multimedia contents of any kind can be viewed.

Therefore, without interfering with the selection of products and/or beverages, it is possible to display both "passive" multimedia contents on the screen, i.e. images, videos, web pages or the like, intended only for user viewing and "active" or "interactive" multimedia contents, such as graphic interfaces capable of providing navigation within selected sites of a local or internet network by way of the touch screen.

The portion of the screen for viewing multimedia contents is thus independent of the portion of the screen devoted to the selection of products and/or beverages. In this way, space is made available for commercial sales promotion that can also be used by third parties, such as parties independent from the manager or operator of the site in which the machine is installed.

A unit for transmitting and receiving signals also allows the remote management of the multimedia contents, such as exchanging signals as in the case of interactive multimedia contents and any modifications or replacements of the same contents, without necessarily requiring the intervention of a technician at the site of the machine's installation.

According to an advantageous aspect of the present invention, the screen is rectangular in shape and is disposed with its short sides parallel to the support surface of the machine. Practically, referring for example to a 16:9 screen format, the screen is placed rotated by 90° from the traditional position (as if it were a 9:16 format), in such a way as to provide a wide screen area for each of the independent portions displayed simultaneously.

In any case, the first portion of the screen dedicated to the selection of products and/or beverages is preferably placed below the second portion of the screen dedicated to the display of multimedia contents, so as to meet the necessary requirements of ergonomics for accessing the selection of products and/or beverages.

### Brief Description of the Drawings

Additional features and advantages of the present invention will become more apparent from the following description, made by way of example and not limiting with reference to the attached drawings in which:
- Figure 1 is an elevation front view of an automatic vending machine according to a possible embodiment of the present invention; and
- Figure 2 is a diagram illustrating the connections among certain principal components of a machine according to the present invention.

### Modes for Carrying Out the Invention

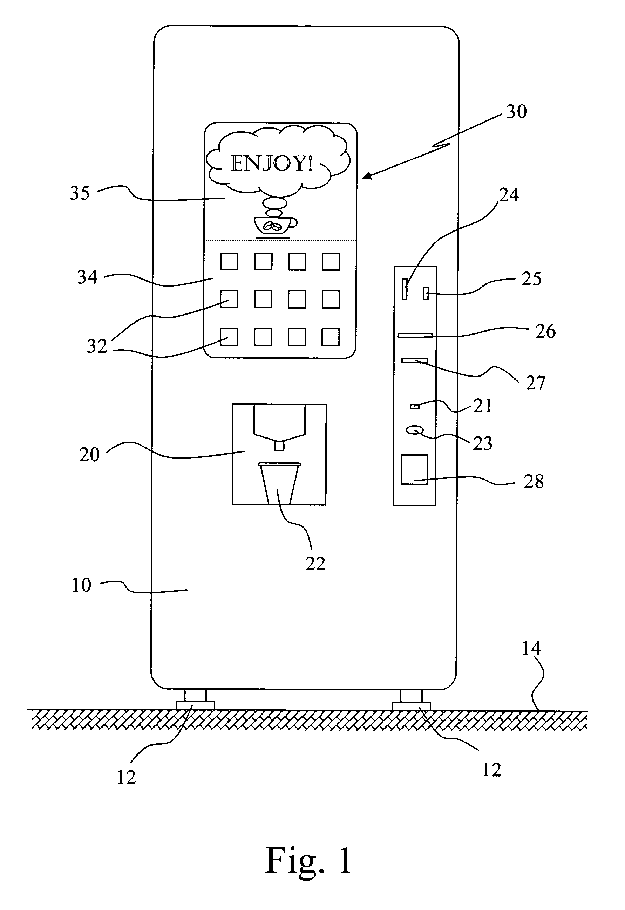

Figure 1 shows schematically a vending machine for hot beverages such as coffee, cappuccino, tea, milk, chocolate or cold beverages such as water, juices or milkshakes and the like.

The distributor, or automatic vending machine, includes a housing 10 mounted on an internal frame (not shown) resting on pads 12 upon a support surface 14.

A compartment 20, usually equipped with a door (not shown) allows access to the dispensing area where the cup 22 can be withdrawn containing the poured beverage. Similar to the machines of a known type, the payment of beverages can be made in cash, for example by introducing coins through a slot 24 or bills through a slot 26, and collecting change if needed from a dish 28; other "cashless" forms of payment may be made for example, by a pre-charged key inserted in a special socket 25, or even yet, by using debit or prepaid cards to be inserted through a slot 27.

The selection of beverages to be poured is done by way of a touch screen monitor 30 and, in particular, through a series of buttons or icons 32 displayed in a first portion 34 of the touch screen 30.

A second portion 35 of the touch screen 30 is instead intended for the simultaneous display of multimedia contents such as images or advertising video of the manufacturer of the machine or the machine's holding manager, or even still, third parties to whom was granted the exploitation of advertising space made available in the portion 35 of screen 30.

The touch screen 30 is rectangular in shape and is preferably installed on the machine with its short sides parallel to the support surface 14 of the machine.

For ergonomic reasons, the first portion of the screen 34 dedicated to the selection of beverages is located below the second portion of the screen 35 dedicated to the display of multimedia contents.

In the embodiment represented herein, the machine can also be equipped with interfaces for externally exchanging signals, for example an USB type interface 21 and a "bluetooth" type interface 23. These interfaces allow an extension between the user and the machine according to the multimedia contents displayed on the portion 35 of the touch screen 30, for example allowing the download of information, songs, videos, images, ringtones files or the like as awards of possible games or sweepstakes offered by the responsible party which offers the multimedia contents.

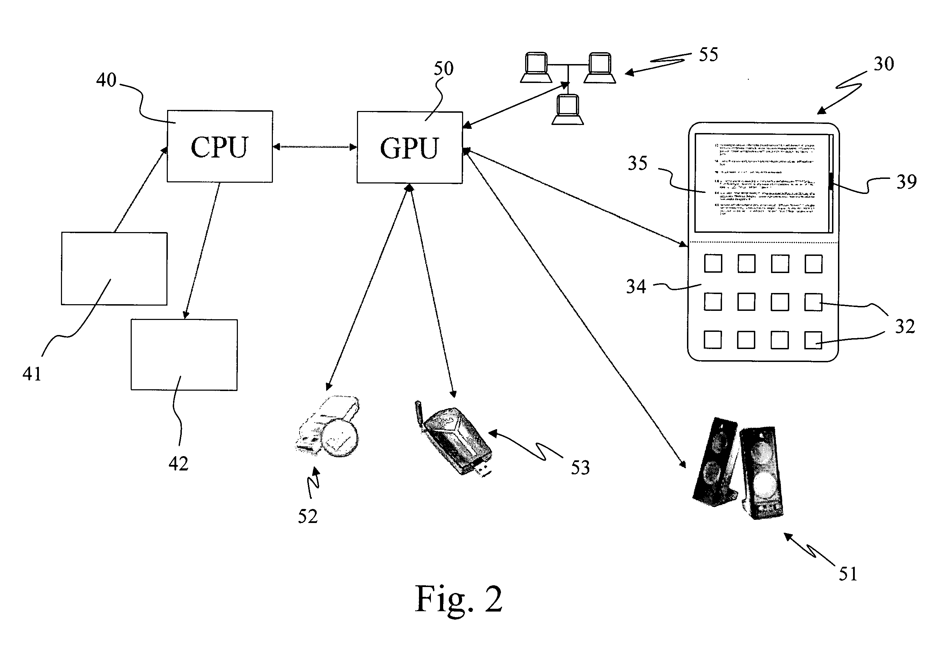

As shown in Figure 2, a machine according to the present invention includes for example a control unit 40 (also identified as CPU) as well as a graphic interface unit 50 (also identified as GPU).

The units CPU 40 and GPU 50 are both programmed to simultaneously enable the selection of beverages on the first portion 34 of the touch screen 30 and the display of multimedia contents on the second portion 35 of the same screen 30. The units 40 and 50 are thus able to simultaneously manage the functions associated with the multimedia contents and the functions associated with the selection of beverages using the same touch screen 30.

The CPU unit 40 receives signals from a plurality of sensors 41 and consequently commands a plurality of actuators 42 present in the machine to handle all the control functions that enable the delivery of beverages.

The units CPU 40 and GPU 50 are also interconnected, for example, via a serial communication line of a RS232 type or the like, allowing the exchange of information and/or commands. The exchange of information between the two units may allow for example, the GPU unit 50 to constantly know the state of the machine and the CPU unit 40 is for example, able to know the selections made by a user via the touch screen 30.

The GPU unit 50 manages in particular the interaction devices for the user, for example, the touch screen 30 and a sound reproduction system 51. The GPU unit 50 comprises at least a first USB port to which is connected a "pen drive" type memory unit 52 to update operation programs of the GPU unit 50.

The multimedia contents displayed on the upper portion 35 of screen 30 can also be updated through the memory unit 52 where such contents are upgradeable and customizable directly by the operator of the automatic vending machine.

The GPU unit 50 also preferably comprises a USB type port which is connected to a modem 53 for remote connection via the internet. This allows, for example, to remotely update the programs and multimedia contents, as well as obtaining contents and news from the web.

Within the GPU unit 50 an "Ethernet" type interface is also made available which allows for example a connection to the local company network 55 of the company in which the machine is installed. The local company network, as well as enabling the connection among different machines within a company, or at least the same site, offers in turn an external connection via the internet, thus allowing remote updates of the multimedia contents.

The monitor portion 35 shown in Figure 2 displays, for example, a web page that offers breaking news. A cursor 39 displayed in the same portion of the screen 35 allows scrolling of the news using the available touch-sensitive screen 30 without interfering with the display of buttons and icons for selection 32 in the lower portion 34 of the same screen. In the upper portion 35 web pages with hyperlinks can also be viewed and navigation can be done so by lightly touching or pressing the touch screen 30 in the position where each link is displayed.

In the upper portion 35 of the screen 30 various forms of multimedia contents can be viewed other than those herein represented. For example, this portion of the screen can be used to supplement or replace the common workplace bulletin board, in which advertisements targeted to employees can be displayed as well as announcements of company social club initiatives, benefits for employees, as well as personal want-ads or for-sale proposals or the like.

Another example of exploitation of the screen portion 35 may involve the opportunity to participate in nation-wide games and lotteries by connecting to the internet.

Various changes may be made to the embodiment herein represented, without going beyond the scope of the present invention. In particular, although the description refers to a beverage vending machine, the principles of the present invention are however also applicable to vending machines for the sale of consumer products in general.

## Claims

1. An automatic vending machine for delivering products and/or dispensing beverages, comprising a touch screen monitor for selecting chosen products and/or beverages, at least one control unit and at least one graphic interface unit both programmed to manage the functions associated with multimedia contents and the functions associated with the selection of products and/or beverages on said screen, **characterized in that** said units are programmed to enable simultaneously the selection on the same screen of products and/or beverages on a first portion of said screen, and the display of multimedia contents on a second portion of said screen.

2. A machine according to claim 1, wherein said units are programmed to enable the touch-sensor functions on said first portion of said screen and disable the touch-sensor functions on said second portion of said screen when passive multimedia contents are displayed.

3. The machine according to claim 1, wherein said units are programmed to enable touch-sensor functions on said first portion of said screen and on one or more areas of said second portion of said screen when interactive multimedia contents are displayed.

4. The machine according to claim 1, wherein said screen is rectangular in shape, and in which the short sides of the screen are parallel to the support surface of the machine.

5. The machine according to claim 1, wherein the first screen portion dedicated to the selection of products and/or beverages is located below the second screen portion dedicated to displaying multimedia contents.

6. The machine according to claim 1, wherein at least one unit is provided for the transmission and reception of signals relating to said multimedia contents.

7. An operating method of an automatic vending machine for the distribution of products and/or the dispensing of beverages, wherein the selection of products and/or beverages is made through a touch screen monitor, and wherein at least one control unit and at least one graphic interface unit are programmed to manage the functions associated with multimedia contents and the functions associated with the selection of products and/or beverages through said screen, **characterized in that** said units are programmed to enable simultaneously the selection on the same screen of products and/or beverages on a first portion of said screen, and the display of multimedia contents on a second portion of said screen.

8. The method according to claim 7, wherein said units are programmed to enable touch-sensor functions on said first portion of said screen and disable the touch-sensor functions on said second portion of said screen when passive multimedia contents are displayed.

9. The method according to claim 7, wherein said units are programmed to enable touch-sensor functions on said first portion of said screen and on one or more areas of said second portion of said screen when interactive multimedia contents are displayed.
